# EUROPEAN PATENT SPECIFICATION

(11) **EP 1 608 901 B1**
(45) Date of publication and mention of the grant of the patent: **27.08.2008**
(21) Application number: 04723644.3
(22) Date of filing: 26.03.2004
(51) Int. Cl.: F16K 11/085, F16K 11/12, F02G 1/043

(54) **A SPLITTER VALVE**
VERTEILERVENTIL
VANNE DE DISTRIBUTION

(30) Priority: 28.03.2003 GB 0307283; 11.07.2003 GB 0316289
(43) Date of publication of application: 28.12.2005
(73) Proprietor: Microgen Energy Limited, Reading, Berkshire RG6 1PT (GB)
(72) Inventor: HASKO, Stephen Michael, Huntingdon Cambridgeshire PE28 4TQ (GB); COOPER, James Edward, Leicestershire LE11 2RD (GB)
(74) Representative: Draper, Martyn John
(86) International application number: PCT/GB2004/001318
(87) International publication number: WO 2004/085893

(56) References cited:
- WO-A-02/12007
- DE-B- 1 283 625
- DE-C- 19 936 591
- GB-A- 2 342 979
- PATENT ABSTRACTS OF JAPAN vol. 018, no. 633 (M-1714), 2 December 1994 (1994-12-02) & JP 06 241567 A (GASTAR CORP), 30 August 1994 (1994-08-30)

## Description

The present invention relates to a splitter valve for splitting an inlet stream into a plurality of outlet streams.

The invention has been particularly designed for the gas stream of a domestic combined heat and power (dchp) system employing a linear free piston Stirling engine. However, the invention is believed to be applicable to any situation where a fluid stream is to be divided into two or more streams.

In a dchp system employing a linear free piston Stirling engine, the engine supplies some of the domestic power and heat requirement. However, to supplement the heat output of the engine, it is necessary to provide a supplementary burner. In order to reduce the cost and space of the unit, and also to reduce the parasitic power consumption, the air intake for both the Stirling engine burner and the supplementary burner is supplied by a single fan. The air from the single fan is then divided into two streams which, having been combined with fuel, feed the two burners.

It has previously been proposed to use a flap valve to split the stream (as in PCT/GB02/005775). With a conventional flap valve, it has been found that the flow in each outlet varies very little as the flap moves across the centre of the junction. Approximately 80% of the total change in flow occurs over the extreme 20% of the valve flap position. Where the flow out of each outlet pipe needs to be accurately controlled using combination of fan speed and flap position, it is essential that precise flow control is possible over the full range of flap movement within the valve.

The problem of flow control is overcome with the use of the profiled orifice at the junction between the flow path as described in GB 0305566.2. This allows the highest resolution of control in the most critical operating zone for both burners.

However, the presence of the flap valve also has some inherent problems. As the vane "faces" the oncoming flow, the motor which drives the vane undergoes high loading when moving the vane, especially at its extremes of travel (i.e. toward either face) at high flow rates. This causes the motor to draw fairly high currents, and also the high loads increase the risk of failure of the vane drive. Under these circumstance, all of the flow would be diverted to one for other burner which, in the worst case, could cause damage to the appliance.

Also relevant is WO 2/12007 wich discloses a splitter valve having inner and outer a cylindrical control elements which are rotatable relatively to one another.

Therefore, a splitter valve is required which provides Therefore, a splitter valve is required which provides the advantages of the profiled orifice, while avoiding the disadvantages of the flap valve.

According to a first aspect of' the present invention there is provided a splitter valve for splitting an inlet stream into a plurality of outlet streams, the valve comprising an inset; a plurality of outlets, one for each outlet stream; an outer sleeve having a plurality of first outlet orifices, one for each stream; an inner element moveably retained within the outer sleeve and having an inlet and a plurality of second outlet orifice, one for each stream; wherein the relative proportion of the inlet stream fed to each outlet is determined by the relative position of the inner element and outer sleeve, and wherein the first and second outlet orifices are shaped such that the flow through each outlet varies substantially linearly with the relative position of the inner element and outer at least when moving from a closed state to a partially open state. sleeve.

The arrangement of the outer sleeve and inner element is considerably more robust than the flap valve and can operate at a more constant power demand as it is not working directly against the direction of flow in its extreme positions. Further, as the first and second outlet orifices are shaped to provide a substantially linear relationship between the relative position of the sleeve and the flow through the outlet, the precise control provided by the flap valve with the profiled orifice is retained.

The inner element and the sleeve may be linearly moveable with respect to one another, or may have a screw thread engagement such that the relative movement is a combination of rotary and linear movements. However, preferably, the inner element and outer sleeve are rotatable with respect to one another as such a motion can be provided with a simple motor without intervening linkage.

In a preferred arrangement, an electromagnetic device is provided within the outer sleeve for moving the inner element. As such an arrangement can be provided internally of the valve casing, it does not present any sealing issues and can therefore be used to handle a combustible gas flow without the need for an expensive sealing arrangement.

The outlets may be arranged circumferentially around the main axis of the sleeve. However, preferably, the outlets are spaced along the axis of the sleeve. This provides a more compact structure as the outlets can be arranged side-by-side and facing in the same direction.

The inner element may be any element which can selectively cover the first outlet orifices in the manner required. For example, it may be a plate or arcuate section of a sleeve. However, preferably, the inner element is a sleeve.

The invention also extends to a gas train for the supply of gas to two or more burners, the gas train having a fan to supply an inlet stream, a splitter valve in accordance with the first aspect of the invention to split the inlet stream into a plurality outlet streams, one for each burner, means to supply combustible gas to each burner, and a controller to control the speed of the fan and the relative positions of the first and second sleeves according to the demands of each burner.

An example of a splitter valve in accordance with the present invention will now be described with reference to the accompanying drawings, in which:
Fig. 1 is a schematic diagram of a gas train in which the splitter valve is intended to be used;
Fig. 2 is a perspective view of an outer sleeve;
Fig. 3 is a similar perspective of an inner sleeve; and
Fig. 4 is a perspective view of a splitter valve with four outlets.

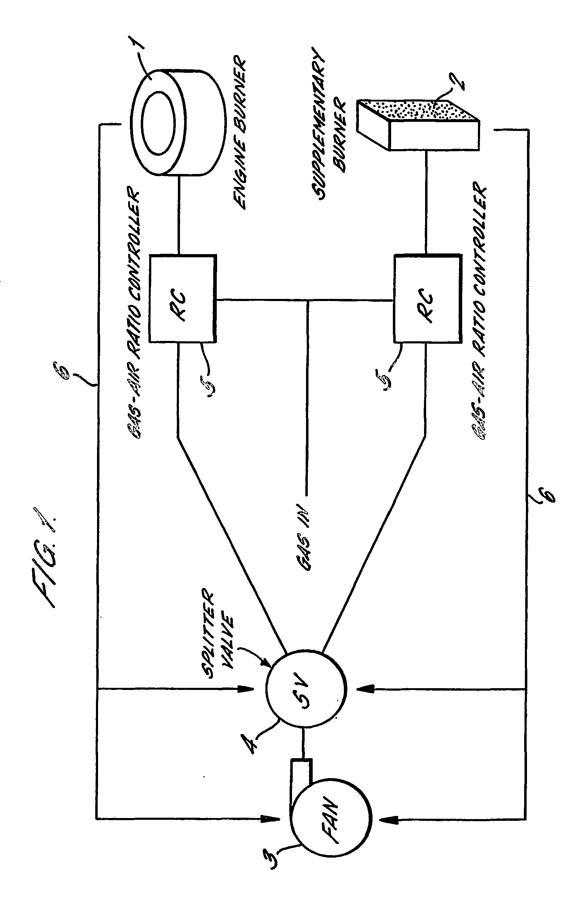

The gas train for a domestic combined heat and power assembly based on a linear free piston Stirling engine is shown in Fig. 1.

The arrangement comprises two burners, namely the Stirling engine burner 1 and supplementary burner 2. The Stirling engine burner 1 is fired according to the domestic demand for heat. As a by-product, this will also generate electricity. However, in order to ensure that there is sufficient capacity to supply all of the domestic heat load, the supplementary burner 2 is provided. The two burners are therefore modulated according to the domestic heat requirement. Air to the burners is supplied from a single fan 3. This stream is split in a splitter valve 4 which is described in greater detail below. Combustible gas is added to each of the air streams under the control of gas/air ratio controllers 5. Information about the demands of the burners 1,2 is fed along control line 6 to the fan 3 and splitter valve 4. The speed of the fan 3 and the position of the splitter valve 4 are controlled accordingly, such that the requirements of the two burners can be satisfied independently. For example, if the engine burner 1 is fully active and the supplementary burner 2 is off, the fan will be operated at an intermediate speed and the splitter valve will ensure that all of the air (subject to a possible purge flow) is fed to the engine burner. If both burners are fully active, the fan will operate at maximum speed and the splitter valve will split the flow between the two burners according to their demands.

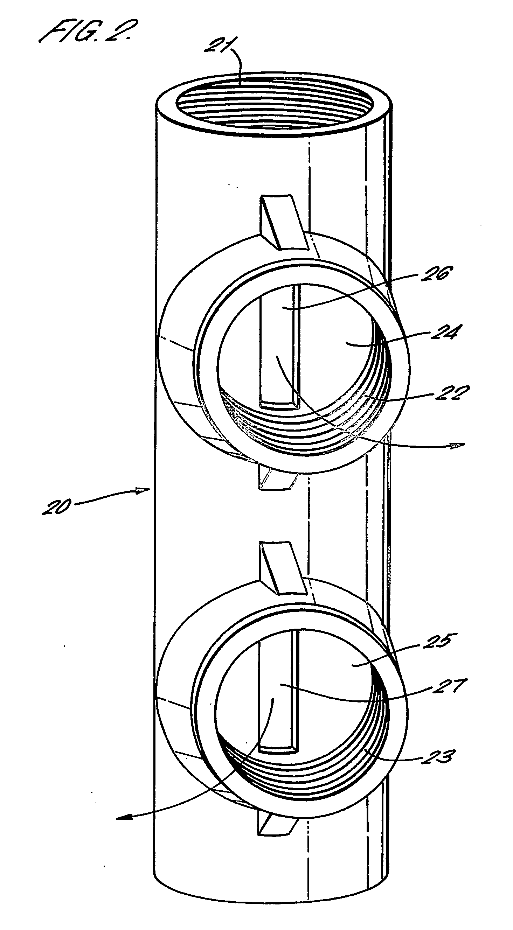

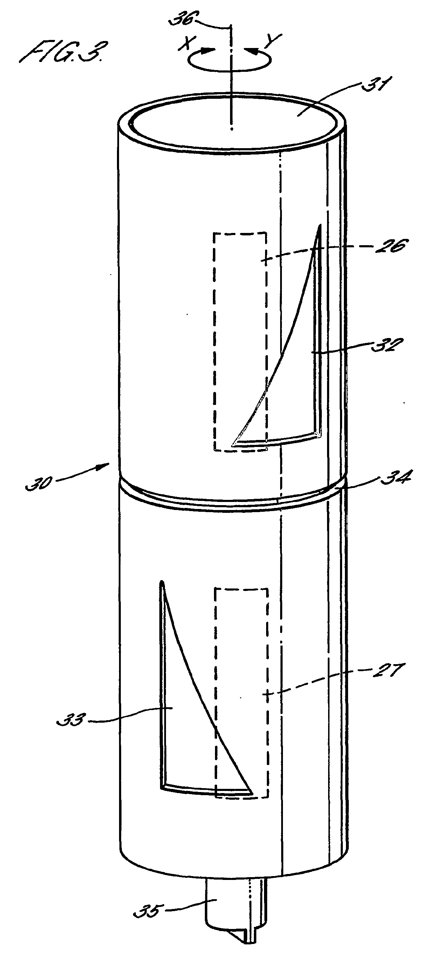

The splitter valve will be described in greater detail with reference to Figs. 2 and 3. Fig. 2 shows an outer sleeve 20 while Fig. 3 shows an inner sleeve 30 which, in use, is rotatably received within outer sleeve 20. Outer sleeve 20 has a screw threaded connection 21 which provides an inlet port in communication with the fan 3. Two similar screw threaded ports 22 and 23 corresponding to first 24 and second 25 outlets provide a connection for ducts leading to the two burners 1,2. The two outlets 24,25 are spaced axially along the sleeve and are both on the same side of the sleeve although they could be circumferentially offset. Each outlet has a first outlet orifice 26,27 which is an axially extending elongate rectangular through aperture in the wall of the outer sleeve 20.

These first outlet apertures 26,27 are shown in dashed lines in Fig. 3 for clarity.

In Fig. 3, the inner sleeve 30 is shown. The sleeve is hollow and has an inlet 31 at the end corresponding to the inlet port 21 to receive air from the fan 3. Second outlet orifices 32,33 are elongate generally triangular through orifices in the wall of the outer sleeve 30. A gas seal (not shown) is provided in an annular groove 34 in the outer wall of the inner sleeve 30 between the second outlet orifices. This prevents flow from one outlet to the other between the outer 20 and inner 30 sleeves.

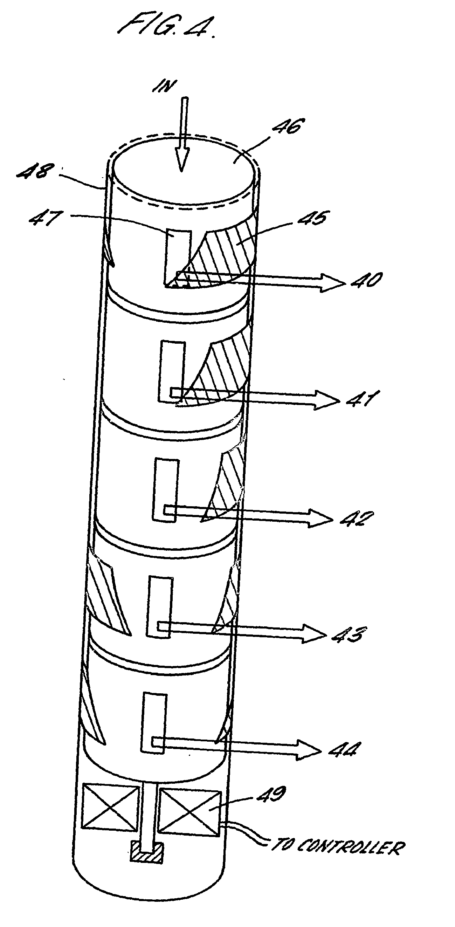

The inner sleeve 30 has a spindle 35 axially extending from the end opposite to the inlet 31. This is connected to a motor (not shown) allowing the inner sleeve 30 to be rotated about axis 36. Alternatively, rotation of the inner sleeve could be effected by a solenoid/electro-magnet contained within the outer sleeve 20. This latter option would enable to the valve to be self-contained and therefore suitable for use with a fuel/air mixture which would allow the splitter valve 4 to be used downstream of the gas entry point, rather than upstream as shown in Fig. 1. A solenoid/electro-magnet arrangement is shown as 40 in Fig. 4.

The operation of the valve will now be described with particular reference to the upper outlet 24. As the inner sleeve is rotated about axis 36 in the direction of arrow X, the second orifice 32 progressively overlaps to a greater and greater degree with the first orifice 26. It will be seen that there is a non-linear relationship between the rotary position of the inner sleeve 30 and the area of overlap such that during initial interaction between the first and second orifices, the area of overlap is relatively small (as compared to the case where second orifice has a similar rectangular shape to that of the first orifice). The exact relationship is determined functionally to ensure that there is, as nearly as possible, a linear relationship between the rotational position of the inner sleeve 30 and the outlet flow. The illustrated configuration of outlets is one which is suitable for a particular purpose. However, it is envisaged that the profile will vary slightly with each particular application, and this variation will be determined by the requirements of the particular function.

A more detailed discussion of the relationship between the sizes of the orifices and the flow distribution of both streams is given in our earlier application GB 0305566.2

It will be appreciated from Fig. 3 that as the sleeve 30 is rotated in the X direction, a greater proportion of flow is directed to the first outlet 24, while movement in the opposite Y direction causes more of the flow to be diverted to the second outlet 25.

It will be appreciated that the first and second orifices could be swapped, such that the rectangular orifice was provided on the inner sleeve and a triangular sleeve was provided on the outer sleeve. Alternatively, both orifices can be provided with a non-rectangular shape.

The present invention also opens up the possibility of diverting the inlet flow to more than two orifices. Fig. 4 schematically shows five outlets 40,41,42,43,44. Second orifices 45 are provided on an inner sleeve 46 and first orifices 47 are provided on outer sleeve 48. A solenoid 49 in the lower end of the housing of the valve provides relative rotational movement between the inner 46 and outer 48 sleeves. The structure and operation of this valve is broadly similar to that of Figs. 2 and 3, so that a detailed explanation is not required here. It will be noted, however, that each of the oblique edged second orifices 45 is offset to a different degree from the rectangular first orifices such that each relative angular position of the inner 46 and outer 48 sleeves provides a different flow to each of the outlets. Owing to the fixed relationship between the first and second sets of orifices, independent control of the outlet streams is not possible. However, this relationship is suitable, for example, for a multistage burner. For example, the first outlet 40 may feed the engine burner 1, while the second 41 to fifth 44 outlets may feed separate stages of the supplementary burner 2 which are required to be fired in sequence to provide different levels of heat output from the supplementary burner. This is disclosed in greater detail in co-pending PCT application based on GB 0316289.8 [Agent's Ref: 62345WO00].

If greater independence is required from the outlet flows, then the inner sleeve 46 could be split into two or more independently moveable inner sleeves.

## Claims

1. A splitter valve for splitting an inlet stream into a plurality of outlet streams, the valve comprising an inlet; a plurality of outlets, one for each outlet stream; an outer sleeve having a plurality of first outlet orifices, one for each stream; an inner element moveably retained within the outer sleeve and having an inlet and a plurality of second outlet orifices, one for each stream; wherein the relative proportion of the inlet stream fed to each outlet is determined by the relative position of the inner element and outer sleeve, and wherein the first and second outlet orifices are shaped such that the flow through each outlet varies substantially linearly with the relative position of the inner element and outer sleeve at least when moving from a closed state to a partially open state.

2. A valve according to claim 1, wherein the inner element and outer sleeve are rotatable with respect to one another.

3. A valve according to claim 1 or claim 2, wherein the outlets are spaced along the axis of the sleeve.

4. A valve according to claim 1 or claim 2, wherein the outlets are spaced around the axis of the sleeve.

5. A valve according to any one of the preceding claims, wherein the inner element is a sleeve.

6. A valve according to any one of the preceding claims, further comprising an electromagnetic device within the outer sleeve for moving the inner element.

7. A gas train for the supply of gas to two or more burners, the gas train having a fan to supply an inlet stream, a splitter valve according to any one of the preceding claims to split the inlet stream into a plurality of outlet streams, one for each burner, means to supply combustible gas to each burner, and a controller to control the speed of the fan and the relative positions of the first and second sleeves according to the demands of each burner.

## Patentansprüche

1. Verteilerventil zum Aufteilen eines Einlassstroms in eine Vielzahl von Auslassströmen, wobei das Ventil umfasst: einen Einlass, eine Mehrzahl von Auslässen mit einem für jeden Auslassstrom, eine Außenhülle mit einer Mehrzahl von ersten Auslassöffnungen mit einer für jeden Strom, ein Innenelement, welches beweglich in der Außenhülle gehalten ist und einen Einlass und eine Mehrzahl von zweiten Auslassöffnungen mit einer für jeden Strom aufweist; wobei der relative Anteil des jedem Auslass zugeführten Einlassstroms durch die relative Position des Innenelements zu der Außenhülle bestimmt ist, und wobei die ersten und zweiten Auslassöffnungen derart gebildet sind, dass der Strom durch jeden Auslass mit der relativen Position des Innenelements zur Außenhülle linear wesentlich variiert, zumindest wenn eine Bewegung von einem geschlossenen Zustand zu einem teilweise offenen Zustand erfolgt.

2. Ventil nach Anspruch 1, wobei das Innenelement und die Außenhülle bezüglich einander beweglich sind.

3. Ventil nach Anspruch 1 oder Anspruch 2, wobei die Auslässe entlang der Achse der Hülle beabstandet sind.

4. Ventil nach Anspruch 1 oder Anspruch 2, wobei die Auslässe um die Achse der Hülle herum beabstandet sind.

5. Ventil nach einem der vorangehenden Ansprüche, wobei das Innenelement eine Hülle ist.

6. Ventil nach einem der vorangehenden Ansprüche, welches ferner eine Hülle zum Bewegen des Innenelements umfasst.

7. Gaszug für die Zufuhr von Gas zu zwei oder mehr Brennern, wobei der Gaszug umfasst: ein Gebläse zum Zuführen eines Einlassstroms, ein Verteilerventil nach einem der vorangehenden Ansprüche zum Aufteilen des Einlassstroms in eine Mehrzahl von Auslassströmen mit einem für jeden Brenner, Mittel zum Zuführen von brennbarem Gas zu jedem Brenner und eine Steuerung zum Steuern der Geschwindigkeit des Gebläses und der relativen Positionen der ersten und zweiten Hüllen entsprechend der Anforderung jedes Brenners.

## Revendications

1. Vanne de distribution destinée à séparer un flux d'entrée en une pluralité de flux de sortie, la vanne comprenant une entrée, une pluralité de sorties, une pour chaque flux de sortie, un manchon extérieur ayant une pluralité de premiers orifices de sortie, un pour chaque flux, un élément intérieur étant retenu avec possibilité de déplacement à l'intérieur du manchon extérieur et ayant une entrée et une pluralité de deuxièmes orifices de sortie, un pour chaque flux, où la proportion relative du flux d'entrée appliquée à chaque sortie est déterminée par la position relative de l'élément intérieur et du manchon extérieur et où les premiers et deuxièmes orifices de sortie sont formés de sorte que le débit à travers chaque sortie varie de manière sensiblement linéaire avec la position relative de l'élément intérieur et du manchon extérieur au moins lors du déplacement d'un état fermé à un état partiellement ouvert.

2. Vanne selon la revendication 1, dans laquelle l'élément intérieur et le manchon extérieur peuvent tourner l'un par rapport à l'autre.

3. Vanne selon la revendication 1 ou la revendication 2, dans laquelle les sorties sont espacées le long de l'axe du manchon.

4. Vanne selon la revendication 1 ou la revendication 2, dans laquelle les sorties sont espacées autour de l'axe du manchon.

5. Vanne selon l'une quelconque des revendications précédentes, dans laquelle l'élément intérieur est un manchon.

6. Vanne selon l'une quelconque des revendications précédentes, comprenant en outre un dispositif électromagnétique à l'intérieur du manchon extérieur pour déplacer l'élément intérieur.

7. Ensemble d'alimentation en gaz destiné à l'alimentation en gaz de deux ou plusieurs brûleurs, l'ensemble d'alimentation en gaz comportant un ventilateur pour fournir un flux d'entrée, une vanne de distribution selon l'une quelconque des revendications précédentes pour séparer le flux d'entrée en une pluralité de flux de sortie, un pour chaque brûleur, un moyen pour fournir du gaz combustible à chaque brûleur et un contrôleur pour commander la vitesse du ventilateur et les positions relatives des premier et deuxième manchons conformément aux demandes de chaque brûleur.
